Europäisches Patentamt

(19) European Patent Office

Office européen des brevets

(11) Numéro de publication: **0 017 556**
**A1**

(12) **DEMANDE DE BREVET EUROPEEN**

(21) Numéro de dépôt: **80400393.7**

(22) Date de dépôt: **25.03.80**

(51) Int. Cl.³: **H 01 G 4/24**
**H 01 G 13/06**

(30) Priorité: **03.04.79 FR 7908375**

(43) Date de publication de la demande:
**15.10.80 Bulletin 80/21**

(84) Etats Contractants Désignés:
**DE GB IT**

(71) Demandeur: **L.C.C.-C.I.C.E. - COMPAGNIE EUROPEENNE DE COMPOSANTS ELECTRONIQUES**
**36, avenue Galliéni**
**F-93170 Bagnolet(FR)**

(72) Inventeur: **Dermenjian, Alain**
**"THOMSON-CSF" SCPI 173, Bld Haussmann**
**F-75360 Paris Cedex 08(FR)**

(72) Inventeur: **Bernard, Daniel**
**"THOMSON-CSF" SCPI 173, Bld Haussmann**
**F-75360 Paris Cedex 08(FR)**

(74) Mandataire: **Favre, Maurice et al,**
**"THOMSON-CSF" - SCPI 173, bld Haussmann**
**F-75360 Paris Cedex 08(FR)**

(54) **Condensateur à diélectrique métallisé pour hautes tensions.**

(57) L'invention se rapporte aux condensateurs à diélectrique métallisé enroulé en forme de cylindre.

Ce type de condensateur est le siège d'arc intérieurs dus aux défauts du diélectrique, utiles pour restaurer par volatilisation l'isolement du condensateur, mais libérant, dans le cas de tensions élevées, une énergie excessive pouvant entraîner la destruction du condensateur. L'invention prévoit de diviser les armatures conductrices déposées sur le diélectrique en compartiments (6) de surface limitée, avec des régions plus étroites formant soit fusible (7), soit une résistance de limitation de courant telles que (4). Les séparations sont faites avantageusement par rayon laser.

Les applications sont du domaine des circuits à tension élevée, typiquement supérieure à 100 volts.

FIG_2

1

## CONDENSATEUR A DIELECTRIQUE METALLISE POUR HAUTES TENSIONS

La présente invention se rapporte au domaine des condensateurs dont les deux armatures conductrices sont directement déposées sur le diélectrique, sous forme de couches métalliques adhérentes ou "métallisations". Ce type de condensateur est habituellement, pour des raisons d'encombrement, présenté sous une forme cylindrique, l'ensemble des armatures et du diélectrique, constituant une bande souple, étant enroulé sur lui-même, et les contacts de sortie étant assurés par deux dépôts métalliques épais réalisés aux extrémités du cylindre.

Il est connu que, lors des contrôles en fin de fabrication ou de l'utilisation de tels condensateurs, les défauts du diélectrique donnent lieu à des décharges locales en forme d'arcs, oxydant ou volatisant localement l'armature métallisée. Ces décharges sont utiles car elles restaurent ainsi l'isolement normal. Ce processus est appelé "cicatrisation".

Cependant, pour des condensateurs d'une certaine capacité, et des tensions supérieures à quelques centaines de volts, l'énergie disponible pour une de ces décharges locales est telle que le condensateur peut être au moins localement détruit. Ce risque est d'autant plus grand que l'énergie stockée dans un condensateur est proportionnelle au carré de la tension, ce qui aggrave le danger de destruction dans le cas des condensateurs à haute tension.

Pour remédier à ce risque, on a proposé de diviser les armatures en une pluralité de régions délimitées par des bandes séparatrices non métallisées, chaque région n'étant reliée électriquement

0017556

2

aux autres que par des portions métallisées assurant
la fonction soit de résistance limitatrice du
courant de décharge, soit même d'élément fusible de
sécurité, avec disparition, par vaporisation thermique, de cet élément lors de la cicatrisation.
L'énergie stockée, sous forme statique, par chaque
région, n'est ainsi qu'une faible fraction de
l'énergie totale du condensateur, et les destructions habituellement observées sont évitées.

On a proposé, dans le cas des condensateurs
à diélectrique en papier imprégné, où les armatures
sont réalisées par dépôt d'une couche métallique sur
le diélectrique, de diviser en bandes parallèles
cette métallisation du diélectrique (brevets français 1 051 435 et 1 087 756) ; dans le cas des
condensateurs à diélectrique plastique, il a été
proposé un cloisonnement plus perfectionné des armatures, mais pour des armatures métallisées séparées
du diélectrique (brevet français 1 058 368). Cette
séparation est due au fait qu'il a été jusqu'ici
pratiquement impossible d'apporter une solution
simple au problème dans ce dernier cas, en raison
des inconvénients des enlèvements ou ablations effectués par voie chimique ou par étincelage des couches
de métallisation, lorsque ces enlèvements sont faits
directement sur le diélectrique actif. Ces inconvénients sont évités en disposant les cloisonnements
sur une armature séparée du diélectrique qui reste
alors nu.

C'est un but de la présente invention que
d'apporter une solution à ce problème en proposant
un procédé ne présentant pas ces inconvénients. La
Demanderesse a en effet trouvé qu'un autre moyen
d'ablation ou d'enlèvement, à savoir un faisceau laser, de la couche de métallisation mince d'aluminium ou de zinc déposée directement sur le diélectrique, soit de papier, soit plastique, tel que par
exemple de polypropylène, le polyester, ou le polysulfone, ne présente pas les inconvénients des
procédés chimiques ou à étincelage. Il ne dégrade
pas les propriétés locales de tenue en haute tension,
grâce non seulement à une parfaite régularité géométrique de la zone mise à nu, mais aussi à la propreté du procédé à l'endroit des contours de la
métallisation restante.

A titre d'exemple, ont été réalisés 60 condensateurs bobinés de 100 microfarads avec un film de
polyester de 8 microns et 100mm de large métallisé à
l'aluminium, la métallisation étant séparée en zones
de l'ordre de 50 nanofarads par un traçage au laser
tel que décrit plus loin. Un essa à un gradient de
200 volts par micron environ, soit 1500 volts a
entraîné des cicatrisations conduisant à une perte de
capacité de 1,17 % en moyenne, sans modification de
la résistance d'isolement. Le déroulement ultérieur
des condensateurs a montré qu'il n'y avait pas de
localisation préférentielle des cicatrisations, en
particulier au niveau des tracés laser.

De même, douze condensateurs de 2000 microfarads environ, ont été réalisées, par mise en
parallèle de condensateurs du type précédent, totalisant 249 condensateurs bobinés ; ils ont permis
des observations identiques lors de l'essai à
1500 volts, c'est-à-dire une perte de capacité de
l'ordre de 1,14 % en moyenne.

Il est essentiel de noter que ces résultats
avantageux sont tout-à-fait différents de ce qui est
obtenu par les moyens connus, par exemple par un traçage par étincelage, où les pertes de capacité dans des conditions comparables atteignent jusque 25 % avec des dégradations de la résistance d'isolement, et où il y a une forte concentration des cicatrisations au voisinage des tracés d'étincelage. Les examens au microscope électronique expliquent bien ces différences ; dans les cas du tracé laser, l'intégrité du diélectrique est maintenue au niveau des tracés et l'ablation du métal y est très régulière. Dans le cas de l'étincelage, le diélectrique et la métallisation sont fortement abîmés au niveau des tracés.

Cependant, il est apparu, lors des essais, que 10 % environ des condensateurs présentaient une diminution sensiblement plus forte que la moyenne, c'est-à-dire plusieurs pour cent, et que ces condensateurs avaient une moins bonne tenue dans les essais de durée consécutifs. Le déroulement des bobines a montré que cela était associé à une décharge encore trop brutale lors de la cicatrisation, dans le cas de la conception classique des tracés de compartimentage.

C'est un autre objet de la présente invention que de remédier à cet inconvénient. Il est d'une part proposé des tracés nouveaux comportant une définition de la surface des compartiments pour limiter l'énergie 1/2 $CV^2$ localisée dans chacun d'eux à la tension maximale, à une valeur permettant le processus de cicatrisation.

Il est d'autre part proposé une définition de la dimension des régions d'accès aux compartiments ou "portes", et définissant en outre des tracés supplémentaires limitant le transfert d'énergie à l'intérieur du compartiment.

5

C'est l'utilisation du procédé d'enlèvement des bandes séparatrices non métallisées par faisceau laser qui, là encore, procure l'avantage d'une réalisation fine et précise des tracés correspondants.

Plus précisément, l'invention consiste en un condensateur à diélectrique métallisé pour hautes tensions, bobiné suivant un cylindre, caractérisé en ce que la couche de métal déposée directement sur le diélectrique actif a subi un enlèvement localisé en certaines zones par faisceau laser, pour y définir un système de lignes non conductrices de largeur comprise entre 0,06 et 1,8mm orientées principalement à l'axe du cylindre.

L'invention sera mieux comprise à l'aide de la description ci-après, où :

- la figure 1 représente une bande diélectrique revêtue d'une des armatures conductrices réalisée sous forme d'une métallisation, et comportant des compartiments capacitifs reliés entre eux par des parties fusibles ;

- les figures 2, 3 et 4 représentent des variantes de la bande diélectrique de la figure 1, où les compartiments sont reliés entre eux, de plus, par des parties résistives.

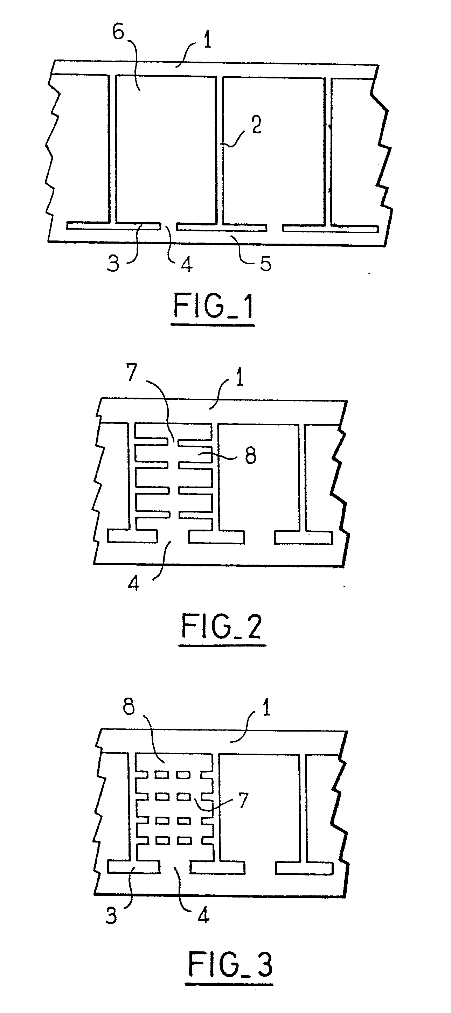

La figure 1 représente la configuration du film métallisé utilisé pour les condensateurs selon l'invention. Une région non métallisée est la marge 1, et les bandes séparatrices 2 et 3 démétallisées de largeur de l'ordre de 0,2mm, laissant une "porte" 4 de 5mm environ et en 5 une zone continue métallisée de quelques millimètres de large, assurant un contact optimum avec les dépôts métalliques, non représentés, destinés à établir les contacts de sortie.

6

La résistance série du condensateur, qui doit rester aussi faible que possible, n'est pratiquement pas augmentée, malgré le resserrement dû à la porte 4, nécessaire pour que la concentration marquée du courant y crée aisément une coupure de sécurité ou "fusible". Lors des essais on a effectivement observé des cicatrisations sans dégradation accompagnées en général d'une disparition des métallisations très précise au niveau des portes 4. Toutefois, dans quelques cas, cette disparition s'est étendue à une zone importante comprise entre la porte et la tache de cicatrisation. Pour minimiser ce phénomène, l'invention prévoit de limiter l'énergie disponible dans chaque compartiment, représenté en 6 sur la figure 1.

Un condensateur selon l'invention comportera par exemple des compartiments 6 de surface telle que l'énergie $1/2$ $CV^2$ localisée dans chaque compartiment à la tension maximale ne dépasse pas 40 millijoules, pour du diélectrique constitué par exemple par du polypropylène ou du polyester ; les limites 1 et 2 du compartiment sont tracées au laser de longueur d'onde 1,06 µm avec une largeur de 0,2mm ; la porte 4 aura une largeur de 5mm.

Les figures 2 et 3 représentent, suivant deux variantes, des configurations de films métallisés utilisés pour les condensateurs selon l'invention, où des zones supplémentaires non métallisées ont été ménagées dans la partie voisine de chaque porte pour localiser ou diminuer le courant maximum instantané, tout en n'augmentant la résistance série que de façon négligeable. Ces tracés supplémentaires sont, par exemple, analogues à ceux définissant les coupures 3 et les portes 4, et leur sont sensiblement parallèles, mais au lieur de constituer le bord des compartiments 6, ils divisent ceux-ci en un certain nombre n de cases 8 de surfaces sensiblement égales. En outre, la dimension des portes correspondantes 7 est inférieure à celle de la porte 4 de la figure 1 et de préférence voisine de 1/n fois cette dimension. Le nombre n est choisi de préférence pour que l'énergie localisée dans chaque cas à la tension maximale soit comprise entre 1 à 20 millijoules, avec une valeur préférée de 19 millijoules.

L'adoption de ces valeurs a permis de vérifier que, dans la généralité des cas, les portes constituant les fusibles ont fonctionné comme prévu, sans que les décharges néfastes indiquées plus haut se soient produites.

L'ensemble de ces résultats avantageux, sans dégradation des caractéristiques, hormis une faible diminution de la capacité, doit être attribué à l'utilisation d'un faisceau laser pour la réalisation des régions démétallisées selon l'invention. Après démontage, il a été constaté qu'aucune cicatrisation n'avait eu lieu à proximité immédiate des tracés laser, ce qui montre l'avantage industriel du procédé de préserver l'intégrité du diélectrique, et par conséquent sa tenue vis-à-vis des champs électriques élevés. En pratique, l'enlèvement de métal, qui a été indiqué plus haut sous la forme d'un trait de 0,2mm de largeur, peut être compris entre 0,06 mm et 1,8 mm de largeur.

8

REVENDICATIONS

1. Condensateur à diélectrique métallisé, pour hautes tensions, bobiné suivant un cylindre, caractérisé en ce que la couche de métal déposée directement sur le diélectrique actif a subi un enlèvement localisé en certaines zones par faisceau laser, pour y former un système de lignes non conductrices de largeur comprise entre 0,06 et 1,8 mm orientées principalement parallèlement à l'axe du cylindre, complété par une pluralité de sous-systèmes de lignes ou zones étroites non conductrices, sensiblement parallèles entre eux et orthogonaux à ce système, définissant des régions conductrices, électriquement reliées entre elles, ces régions assurant, lorsqu'elles sont chargées par lesdites hautes tensions, la cicatrisation optimale du condensateur.

2. Condensateur selon la revendication 1, où les sous-systèmes sont répartis à des distances égales entre elles.

3. Condensateur selon l'une des revendications 1 ou 2, comportant un film diélectrique dont un bord est non métallisé, caractérisé en ce que les lignes non conductrices du système partent de ce bord et s'arrêtent à une distance comprise entre 1 et 5mm de l'autre bord métallisé du film, en réservant ainsi une métallisation continue sur ce bord.

4. Condensateur selon la revendication 1, caractérisé en ce que chaque sous-système est une ligne non conductrice continue à l'exception d'une porte par zone comprise entre deux lignes du premier système défini à la revendication 1, cette porte étant caractérisée par une largeur comprise entre 2 et 5mm.

5. Condensateur selon la revendication 1, caractérisé en ce que chaque sous-système est une ligne discontinue en forme de tirets, où les tirets représentent les portions rendues non conductrices constituent 50 à 95 % de la longueur de la ligne.

6. Condensateur selon la revendication 1, caractérisé en ce que les cases définies par chaque ligne du premier système et les lignes de deux sous-systèmes voisins ont une capacité partielle C telle que l'énergie $1/2$ $CV^2$ pour la tension maximale $V$ soit supérieure à 1 millijoule et inférieure à 20 millijoules.

7. Condensateur selon l'une quelconque des revendications précédentes, caractérisé en ce que le diélectrique est du polypropylène.

8. Condensateur selon l'une quelconque des revendications précédentes, caractérisé en ce que le diélectrique est du polytéréphtalate.

9. Condensateur selon l'une quelconque des revendications précédentes, caractérisé en ce que le diélectrique est du polysulfone.

10. Condensateur selon la revendication 1, caractérisé en ce que le matériau du diélectrique est du papier.

11. Condensateur selon la revendication 1, caractérisé en ce que le matériau de la couche de métal est le zinc.

FIG_1

FIG_2

FIG_3

**Office européen des brevets**

**RAPPORT DE RECHERCHE EUROPEENNE**

Numéro de la demande
EP 80 40 0393

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| | FR - A - 2 103 198 (SIEMENS AG) <br><br> * Revendications; page 3, lignes 18-25 * <br><br>-- | 1,8 | H 01 G 4/24 <br> H 01 G 13/06 |
| | US - A - 2 683 792 (CORNELL-DUBILIER ELECTRIC CORPORATION) <br><br> * Revendications; figures 2,9; colonne 10, alinéa 2 * <br><br>---- | 1,10, 11 | |

**DOMAINES TECHNIQUES RECHERCHES (Int. Cl. ³)**

H 01 G 4/24
13/06
4/32

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interference
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 01-07-1980 | VAN REETH |

OEB Form 1503.1   06.78